# EUROPÄISCHE PATENTSCHRIFT

(11) **EP 2 811 130 B1**
(45) Veröffentlichungstag und Bekanntmachung des Hinweises auf die Patenterteilung: **31.01.2018**
(21) Anmeldenummer: 14000388.0
(22) Anmeldetag: 04.02.2014
(51) Int. Cl.: F01N 3/20, F02B 37/18, F02M 26/50, F02M 26/15, F02B 29/04

(54) **Verfahren und Vorrichtung zum Entschwefeln eines Abgasrückstroms**
Method and device for the desulphurisation of an exhaust gas return flow
Procédé et dispositif de désulfuration de reflux de gaz d'échappement

(30) Priorität: 07.06.2013 DE 102013009578
(43) Veröffentlichungstag der Anmeldung: 10.12.2014
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- DE-A1-102009 014 361
- DE-A1-102010 050 406
- FR-A3- 2 961 254
- US-A1- 2008 202 101
- US-A1- 2012 159 934

## Beschreibung

Die Erfindung betrifft ein Verfahren zum Entschwefeln eines Abgasrückstroms bei einer Brennkraftmaschine gemäß dem Oberbegriff des Patentanspruchs 1 sowie eine Vorrichtung zur Durchführung des Verfahrens nach dem Oberbegriff des Patentanspruchs 11.

Eine Abgasrückführung wird bei Brennkraftmaschinen zur Absenkung der NOₓ-Emissionen eingesetzt, wobei das Problem besteht, dass bei der Verwendung von stark schwefelhaltigem Kraftstoff Schwefeldioxid und innerhalb der gekühlten Abgasrückführung Schwefelsäure und/oder schwefelige Säure entsteht, die zu einer starken Korrosion der Motorbauteile, wie Ladeluftrohr, Einlassventile, Laufbuchsen etc. führen.

Technisch werden Abgase üblicherweise durch die Zugabe von CaOH oder CaO und nachfolgende Bildung von Kalziumsulfat entschwefelt (DE000003603365C2). Allerdings ist deren Einsatz in der AGR-Leitung schwierig, da CaO, CaOH und das sich bildende CaSO4 relativ stark abrasiv sind, was zu starkem Verschleiß an den Laufbuchsen führt.

Auch die Entschwefelung mit Hilfe von NH₃ unter der Bildung von Ammoniumsulfat ist möglich (DE 3636554 A1), hat sich allerdings auf Grund der hohen Kosten für das eingesetzte NH₃ und die aufwändige Prozessführung nicht durchgesetzt:

2NH₃ + SO₃ + H₂O --> (NH₄)₂SO₄

NH₃ + SO₃ + H₂O --> (NH₄)HSO₄

So muss bei dieser Anwendung das Abgas auf Temperaturen unter 300°C, vorteilhaft auf Temperaturen unter 100°C abgesenkt werden, da sich darüber Ammoniumsulfat, bzw. Ammoniumhydrogensulfat wieder zersetzt, bzw. erst gar nicht bildet.

Auf der anderen Seite besteht durch die selektive katalytische Reduktion (kurz SCR-Verfahren genannt) die Möglichkeit, mit Hilfe von NH₃ Stickoxide stromab der Brennkraftmaschine katalytisch zu vermindern. Meist wird in Fahrzeugen anstelle von NH₃ Harnstoff eingesetzt, der im heißen Abgas NH₃ freisetzt. Verbessert werden kann diese Zersetzung durch die Verwendung eines sogenannten Hydrolysekatalysators, wie er beispielsweise in der DE 4038054 beschrieben wird.

Aus EP1052009 ist zudem ein Verfahren bekannt, die Harnstoffzersetzung in einem Teilstrom durchzuführen.

Grundsätzlich besteht die Möglichkeit in einem Abgasrückführsystem den Abgasrückstrom mit NH₃ anzureichern, um die Stickoxidemissionen gemäß folgender Gleichung in einer sogenannten "selektiven nichtkatalytischen Reduktion" (SNCR) abzusenken:

2NH₃ + 2NO + O₂ --> 2N₂ + 3H₂O

Auf Grund der schlechten Selektivität dieser Reaktion sind, im Gegensatz zum katalytischen SCR- Verfahren, bei dem NOx- Umsätze von über 95% erreicht werden, nur Umsätze 15 bis 25% möglich.

Aus der DE 103 57 402 A1 ist ein Verfahren zum Betreiben eines Verbrennungsmotors bekannt, der eine Abgasreinigungsanlage mit einem Ammoniak-Erzeugungs-Katalysator besitzt. Aus dem vom Verbrennungsmotor zu einer Turbine eines Abgasturboladers geleiteten Abgasstrom wird mittels des Ammoniak-Erzeugungs-Katalysators Ammoniak erzeugt. Dem mit Ammoniak angereicherten Abgasstrom wird vor der Turbine des Abgasturboladers ein Abgasteilstrom abgezweigt, der als Abgasrückstrom auf der Frischluftseite des Verbrennungsmotors eingespeist wird. Mittels vorgesehener Drosselventile lässt sich der Abgasrückstrom beeinflussen, jedoch ist keine gezielte Ammoniakzufuhr in den Abgasrückstrom und damit keine Anpassung der, für eine optimale Entschwefelung des rückgeführten Abgasstroms, notwendigen NH₃- Menge vorgesehen. Dies führt dazu, dass die NH₃- Konzentration in der Abgasrückführung der NH₃- Konzentration vor den SCR-Katalysatoren entspricht. Zudem ergibt sich bei hochschwefelhaltigen Kraftstoffen ein weiteres Problem: Bevor der Abgasstrom der Frischluft zugeführt werden kann, muss er abgekühlt werden, da es ansonsten zu erhöhten NOx- Emissionen, geringerer Leistung und im schlimmsten Fall zu einer Beschädigung des Motors kommen könnte. An den hierfür notwendigen Kühlern kommt es allerdings bei Unterschreiten von ca. 300°C und Anwesenheit von Ammoniak zum Ausfall von Ammoniumsulfat, bzw. Ammoniumhydrogensulfat, die zu einer Verblockung des Kühlers führen.

Aus der WO 2012/096123 A1 ist eine mit NH₃ betriebene Brennkraftmaschine bekannt, bei der stromabwärts der Turbine eines Turboladers aus dem Abgasstrom ein Abgasrückstrom zur Frischluftseite des Verdichters des Turboladers abgezweigt wird. Dabei wird in den Abgasrückstrom eine wässrige Ammoniaklösung injiziert. Dies dient zwei Aspekten: Zum einen wird hierdurch der rückgeführte Abgasstrom gekühlt, zum anderen reagiert der Ammoniak im Brennraum mit den dort entstehenden Stickoxiden in der bereits oben beschriebenen "selektiven nichtkatalytischen Reduktion" (SNCR) zu Stickstoff. Durch die Verknüpfung beider Funktionen, nämlich die Kühlung des Abgases und die Verringerung der Stickoxide durch NH₃ können die teilweise unterschiedlichen Anforderungen nicht unabhängig voneinander variiert werden, geschweige denn, eine zusätzliche, unabhängige Funktion, wie die Entschwefelung durch Ammoniumsalzbildung dargestellt werden.

Beiden Verfahren ist gemein, dass sie nicht mit Ammoniakvorläufersubstanzen wie Harnstoff, Guanidiniumformiat, Cyanursäure oder Ammoniumformiat arbeiten. Der Grund hierfür liegt im hohen Korrosionsgrad der Verbindungen bzw. der daraus entstehenden Produkte wie Isocyansäure und Ameisensäure.

Ferner ist aus der JP 2009-85011 A ein Verfahren bekannt, bei dem in Abhängigkeit von einem einlassseitig gemessenen pH-Wert ggf. NH₃ erzeugt und der Frischluftseite zugeführt wird, um den pH-Wert zu beeinflussen.

Die DE 10 2010 050 406 A1 offenbart ein Verfahren, welches eine möglichst gleichbleibende Abgasreinigungsleistung über die Betriebszeit ermöglichen will. Hierzu wird eine Gesamtabgasrückführrate durch einen stromab von der Abgasreinigungseinheit abgezweigten Niederdruckanteil und einen stromauf von einer im Abgastrakt angeordneten Abgasturboladerturbine abgezweigten Hochdruckanteil gebildet, wobei bei zumindest annähernd gleichen Betriebspunkten der Brennkraftmaschine mit zunehmender Betriebszeit der Abgasreinigungseinheit ein im Wesentlichen abnehmender Niederdruckanteil eingestellt wird.

Der Erfindung liegt die Aufgabe zugrunde, ein Verfahren zur Abgasnachbehandlung bei einer Brennkraftmaschine anzugeben, mit dem möglichst kostengünstig eine gezielte Entschwefelung möglich ist.

Die Lösung dieser Aufgabe wird mit den Merkmalen des Patentanspruchs 1 erhalten. Besonders vorteilhafte Weiterbildungen der Erfindung sind in den darauf rückbezogenen Unteransprüchen offenbart.

Gemäß Patentanspruch 1 ist ein Verfahren zum Entschwefeln eines Abgasrückstroms einer mit einem Abgasturbolader aufgeladenen Brennkraftmaschine vorgesehen, der der Brennkraftmaschine auf deren Frischluftseite zugeführt wird, wobei zur Entschwefelung im Abgasrückstrom Ammoniak eingesetzt wird, und wobei aus dem Abgasstrom der Brennkraftmaschine wenigstens ein Abgasteilstrom abgezweigt wird. Erfindungsgemäß wird von einem von der Brennkraftmaschine über eine Turbine des Abgasturboladers zu einem SCR-Katalysator geführten Abgashauptstrom stromauf der Turbine ein erster Abgasteilstrom abgezweigt, wobei dem abgezweigten ersten Abgasteilstrom vor dessen teilweiser Zurückführung in den Abgashauptstrom wenigstens ein ammoniakabspaltender Reaktant zugeführt wird und der so beladene Abgasteilstrom teilweise als Abgasrückstrom direkt der Frischluftseite und teilweise als Nachbehandlungsteilstrom stromauf des SCR-Katalysators in den zum SCR-Katalysator geführten Abgashauptstrom zurückgeführt wird, wobei die der Frischluftseite zugeführte Abgasrückstrommenge und die dem SCR-Katalysator zugeführte Menge des Nachbehandlungsteilstroms in Abhängigkeit von wenigstens einem, die jeweilige Betriebssituation der Brennkraftmaschine definierenden Betriebsparameter vorgegeben und/oder variiert werden. Durch die Zufuhr von Ammoniak in den abgezweigten Abgasteilstrom kann eine Entschwefelung des Abgasrückstroms mit verhältnismäßig geringer Ammoniakzufuhr und somit entsprechend kostengünstig durchgeführt werden. Dies erfolgt, wie bereits oben beschrieben, durch die Bildung von Ammoniumsulfat:

2NH₃ + SO₃ + H₂O --> (NH₄)₂SO₄

Entgegen dem Stand der Technik kann die der Abgasrückführung bzw. Frischluftseite zugeführte NH₃- Menge durch Variation der der Abgasrückführung bzw. Frischluftseite und der dem Abgasnachbehandlungssystem zugeführten NH₃- beladenen Abgasteilstrommenge dem für die Entschwefelung notwendigen Bedarf angepasst werden. Da die Konzentration von Schwefeloxiden im Abgas üblicherweise niedriger als die Konzentration der Stickoxide ist, bedeutet dies, dass die NH₃- Konzentration vor Eintritt in den Brennraum niedriger als die NOx- Konzentration, aber größer gleich der SOx- Konzentration eingestellt wird.

Ein weiterer Vorteil des Verfahrens im Vergleich zum Stand der Technik besteht darin, dass nicht nur Ammoniak, sondern auch seine Vorläufersubstanzen, wie Harnstoff, Guanidiniumformiat (GUFO), Cyanursäure oder Ammoniumformiat eingesetzt werden können, da auf Grund des stromauf des Turboladers vorherrschenden hohen Temperaturniveaus eine Freisetzung von NH₃ begünstigt wird. Diese kann zusätzlich durch die Verwendung von Katalysatoren stromab der Zuführungsstelle für den ammoniakabspaltenden Reakanten verbessert werden. Im Fall von Harnstoff, Cyanursäure und Ammoniumformiat bieten sich titanoxid- und/oder siliziumoxid- und/oder eisenoxid- und/oder wolframoxid- und/oder aluminiumoxid- und/oder vanadiumoxid- und/oder zeolithhaltige, im Fall von GUFO goldhaltige Katalysatoren an.

Der erste Abgasteilstrom zweigt bei der mit einem Abgasturbolader aufgeladenen Brennkraftmaschine stromauf einer Turbine des Abgasturboladers ab. Diese Entnahme an der Hochdruckseite des Turboladers ermöglicht einen einfachen Gesamtaufbau, da auf Grund der Druckdifferenz auf Fördereinrichtungen für den NH₃- haltigen Abgasstrom in der Regel verzichtet werden kann.

Die Zuführung des ammoniakhaltigen Teilstroms zum Abgasrückstrom oder der Frischluft erfolgt sinnvollerweise stromab des Abgaskühlers bzw., bei aufgeladenen Brennkraftmaschinen, stromab eines Ladeluftkühlers. Hierdurch kann, im Gegensatz zum Stand der Technik, ein Verblocken der Kühler durch Ammoniumsulfate vermieden werden.

Der erste Abgasteilstrom wird somit in einen Abgasrückstrom und einen zur katalytischen Reduktion verwendeten zweiten Abgasteilstrom aufgeteilt, wobei der zweite Abgasteilstrom in den zum SCR-Katalysator führenden Abgasstrom eingespeist wird. Auf diese Weise kann das dem abgezweigten ersten Abgasteilstrom zugeführte Ammoniak auch zur selektiven katalytischen Reduktion in einem SCR-Katalysator anteilig verwendet werden.

Das Abgasrückführungssystem kann auch so betrieben werden, dass auf der Frischluftseite der Brennkraftmaschine ein stromabwärts des SCR-Katalysators abgezweigter weiterer Abgasteilstrom eingespeist wird. Durch eine Drosselung der unterschiedlichen abgezweigten Abgasteilströme kann eine gezielte Abgasrückführung durchgeführt werden, bei der eine Entschwefelung des Abgasrückstroms gewährleistet ist.

Die Zuführung des ammoniakbeladenen Teilstroms in die Frischluftseite bzw. Abgasrückführung erfolgt vorzugsweise stromab eines oder mehrerer frischluftseitiger bzw. abgasrückführseitiger Kühler(s). Entfällt dieser separate Kühler und wird funktional mit dem Ladeluftkühler kombiniert, d.h. Ladeluft und Abgasrückführung werden stromauf des Ladeluftkühlers zusammengeführt, so erfolgt die Zuführung des ammonikhaltigen Teilstroms wiederum stromab dieses Kühlers.

Der Frischluftseite der Brennkraftmaschine kann ein stromaufwärts der Turbine des Abgasturboladers abgezweigter dritter Abgasteilstrom eingespeist werden. Dieser dritte Abgasteilstrom wird vorzugsweise mittels eines Wärmetauschers auf eine geeignete Abgastemperatur abgekühlt.

Eine Drosselung der Abgasteilströme und/oder eines dem SCR-Katalysator zugeführten zweiten Abgasteilstroms werden vorzugsweise in Abhängigkeit von Betriebsparametern des Gesamtsystems dargestellt. Dadurch ergeben sich optimale Betriebsbedingungen sowohl für die geforderte Entschwefelung als auch für eine durchzuführende selektive katalytische Reduktion. Besonders vorteilhaft ist es dabei, wenn auch die zugeführte NH₃-Menge in Abhängigkeit von Betriebsparametern des Gesamtsystems geregelt wird.

Der Erfindung liegt außerdem die Aufgabe zugrunde, eine Vorrichtung zur Entschwefelung eines Abgasrückstroms bei einer Brennkraftmaschine zu schaffen, mit der insbesondere das erfindungsgemäße Verfahren durchführbar ist.

Die Lösung der auf die Vorrichtung bezogenen Aufgabenstellung erhält man durch die im Patentanspruch 8 angegebenen Merkmale. Besonders vorteilhafte Weiterbildungen der erfindungsgemäßen Vorrichtung sind in den darauf rückbezogenen Unteransprüchen offenbart.

Gemäß Patentanspruch 8 ist eine Vorrichtung zum Entschwefeln eines Abgasrückstroms vorgesehen, der der mit einem Abgasturbolader ausgerüsteten Brennkraftmaschine auf deren Frischluftseite zugeführt wird. Erfindungsgemäß ist vorgesehen, dass von einer von der Brennkraftmaschine zu einer Turbine des Abgasturboladers und weiter zu einem SCR-Katalysator führenden Abgasleitung eine erste Abzweigleitung stromauf einer Turbine des Abgasturboladers abzweigt, wobei die erste Abzweigleitung mit einer Zuführeinrichtung zur Zuführung wenigstens eines ammoniakabspaltenden Reaktanten gekoppelt ist und einen ersten Abgasteilstrom als ammoniakbeladenen Abgasrückstrom direkt zur Frischluftseite bzw. Abgasrückführung der Brennkraftmaschine zurückführt. Ferner ist eine von der ersten Abzweigleitung abzweigende zweite Abzweigleitung vorgesehen, die stromauf des SCR-Katalysators in die zum SCR-Katalysator führende Abgasleitung mündet und einen Teil des ersten Abgasteilstroms zur Abgasnachbehandlung in den SCR-Katalysator zurückführt, wobei eine Steuer- und/oder Regelungseinrichtung vorgesehen ist, die die der Frischluftseite zugeführte Abgasrückstrommenge und die dem SCR-Katalysator zugeführte Menge des Nachbehandlungsteilstroms in Abhängigkeit von wenigstens einem, die jeweilige Betriebssituation der Brennkraftmaschine definierenden Betriebsparameter vorgibt und/oder variiert. Die Reduktionsmittelzersetzung kann hier somit parallel zu einem Abgasturbolader erfolgen, wo eine hohe Ammoniakkonzentration vorliegt. Das hier herrschende hohe Druckniveau ergibt, dass zusätzliche Fördereinrichtungen in der Regel nicht erforderlich sind.

Vorteilhaft ist es weiter, wenn von der zur Turbine führenden Abgasleitung eine dritte Abzweigleitung abzweigt, die über einen Wärmetauscher an eine Frischluftleitung der Brennkraftmaschine angeschlossen ist. Damit kann ein zusätzlicher, in seiner Temperatur abgesenkter Abgasrückstrom auf der Frischluftseite der Brennkraftmaschine eingespeist werden. An die Frischluftleitung können dabei die Hochdruckseite eines Verdichters des Turboladers und die erste Abzweigleitung angeschlossen sein.

Um eine von Betriebsparametern abhängige optimierte Regelung der Gasströme vornehmen zu können, sind vorzugsweise vor und nach der von der ersten Abzweigleitung abzweigenden zweiten Abzweigleitung in der ersten Abzweigleitung steuerbare Drosselvorrichtungen angeordnet.

Die Erfindung wird nachfolgend anhand von in der Zeichnung dargestellten Ausführungsbeispielen näher erläutert.

Es zeigen:
- Fig. 1: eine Brennkraftmaschine mit einem Abgasrückführsystem, bei dem die Zufuhr eines NH₃-haltigen Abgasstroms auf der Saugseite eines Verdichters erfolgt,
- Fig. 2: eine Brennkraftmaschine mit einem Abgasrückführungssystem, bei dem ein NH₃-haltiger Abgasstrom auf der Frischluftseite stromabwärts nach einem Verdichter der Brennkraftmaschine zugeführt wird, und
- Fig. 3: eine Brennkraftmaschine mit einem Abgasrückführsystem, bei dem die Zufuhr eines NH₃-haltigen Abgasstroms auf der Druckseite eines Verdichters erfolgt.

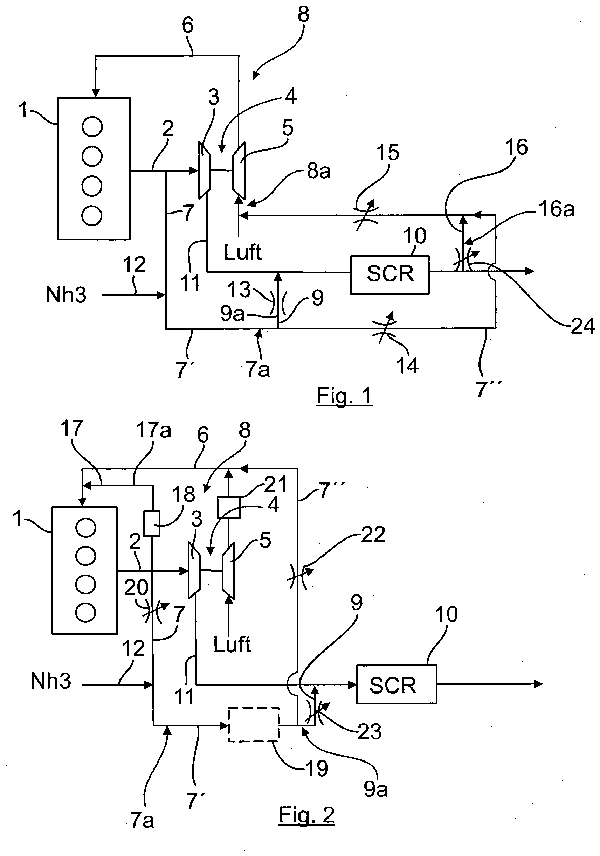

Die schematische Darstellung von Figur 1 zeigt eine Brennkraftmaschine 1, deren Abgasstrom über eine Abgasleitung 2 einer Turbine 3 eines Turboladers 4 zugeführt wird. Die Turbine 3 treibt einen Verdichter 5 des Turboladers 4 an, über den Luft über eine Frischluftleitung 6 der Brennkraftmaschine 1 zugeführt wird.

Von der Abgasleitung 2 wird über eine erste Abzweigleitung 7a ein erster Abgasteilstrom 7 abgezweigt, der teilweise, in noch zu beschreibender Weise als ammoniakbeladener Abgasrückstrom 7", an einer Saugseite 8a des Verdichters 5 der angesaugten Luft beigemischt wird. Von der ersten Abzweigleitung 7a zweigt eine zweite Abzweigleitung 9a ab, über die ein zweiter Abgasteilstrom 9 in eine zu einem SCR-Katalysator 10 führende Abgasleitung 11 eingespeist wird. Über die Abgasleitung 11 wird dem SCR-Katalysator 10 der Abgashauptstrom der Brennkraftmaschine 1 zugeführt.

Über eine Injektionsleitung 12 wird dem ersten Abgasteilstrom 7 NH₃ in einer für die Entschwefelung des Abgasrückstroms 7" geeigneter Menge zugeführt. Außerdem werden die abgezweigten Teilströme mittels Drosselvorrichtungen 13 bis 15 in Abhängigkeit von Betriebsparametern des Gesamtsystems gesteuert bzw. geregelt. Im dargestellten Ausführungsbeispiel sind hierzu die Drosselvorrichtungen 14 und 15 als mittels einer Steuer- und/oder Regelungseinrichtung (nicht dargestellt) regel- und/oder steuerbare Drosselvorrichtungen ausgebildet. Die zugeführte NH₃-Menge und die Drosselung der Teilströme in den verschiedenen Abzweigleitungen können in Abhängigkeit vom Schwefelgehalt des Kraftstoffs, vom Luft-/Kraftstoffverhältnis und auch von der auf die Frischluftseite 8 der Brennkraftmaschine 1 zurückgeführten Abgasmenge gesteuert werden. Auch weitere Parameter des Gesamtsystems können in die Steuerung mit einbezogen werden, um eine optimale Entschwefelung des zur Brennkraftmaschine 1 zurückgeführten Abgasrückstroms zu erhalten, was nachfolgend noch eingehend erläutert und dargestellt wird.

In Figur 1 ist noch eine weitere Abzweigleitung 16a dargestellt, über die stromabwärts des SCR-Katalysators 10 eine zusätzliche Rückführung eines Abgasteilstroms auf die Frischluftseite 8 der Brennkraftmaschine 1 erfolgt, und zwar vorzugsweise gesteuert und/oder gedrosselt über eine mit der Steuer- und/oder Regeleinrichtung gekoppelte Drosseleinrichtung 24.

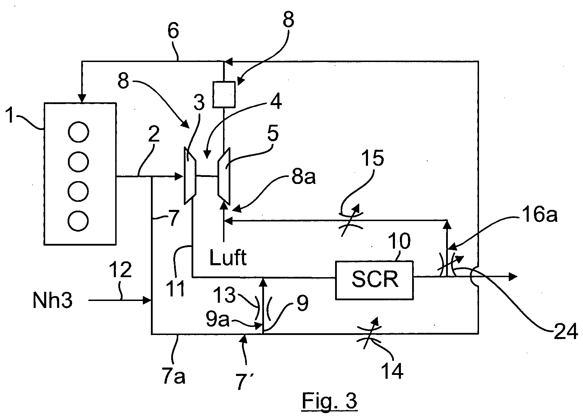

Fig. 3 zeigt einen ähnlichen Aufbau wie Fig. 1. Im Unterschied dazu wird aber hier der ammoniakbeladene Teilstrom 7' der Frischluftseite 8 erst stromab eines Ladeluftkühlers 21 zugeführt, der stromab des Verdichters 5 in die Frischluftleitung 6 eingeschaltet ist. Dadurch soll eine Verblockung des Ladeluftkühlers 21 durch Ammoniumsulfat vermieden werden.

Bei dem in Figur 2 dargestellten Ausführungsbeispiel ist die Brennkraftmaschine 1 an eine Abgasleitung 2 angeschlossen, die die Turbine 3 eines Turboladers 4 antreibt. Ein Verdichter 5 des Turboladers 4 saugt Luft an und fördert diese zur Frischluftseite der Brennkraftmaschine 1 über die Frischluftleitung 6.

Von der Abgasleitung 2 zweigt eine dritte Abzweigleitung 17a ab, über die ein dritter Abgasteilstrom 17 frischluftseitig in die Frischluftleitung 6 eingespeist wird. Mittels eines Wärmetauschers 18 wird dieser dritte Abgasteilstrom 17 auf eine geeignete Prozesstemperatur gekühlt. Die Zusammenführung des ammoniakbeladenen Abgasrückstroms 7" mit der Abgasrückführung bzw. Frischluftleitung 6 erfolgt stromab des Wärmetauschers 18, um eine Verblockung des Kühlers bzw. Wärmetauschers 18 durch Ammoniumsulfate zu vermeiden.

Ein erster Abgasteilstrom 7, der von der Abgasleitung 2 über eine erste Abzweigleitung 7a abgezweigt wird, gelangt über diese auf die Frischluftseite 8 der Brennkraftmaschine 1. Der restliche Teil des ersten Abgasteilstroms 7 gelangt als ammoniakbeladener Abgasteilstrom 7' über eine zweite Abzweigleitung 9in ein Abgasnachbehandlungssystem, welches hier beispielhaft einen SCR-Katalysator 10 umfasst. In die erste Abzweigleitung 7a kann außerdem ein Katalysator 19 zur Zersetzung des ammoniakabspaltenden Reaktanten eingesetzt sein, um die Freisetzung von NH₃ zu begünstigen und die Bildung von unerwünschten, korrosiven Reaktionsprodukten zu vermeiden.

Um den in der Abgasrückführung enthaltenen Anteil an NH₃ zu regeln, kann die Zufuhr von NH₃ mittels der zuvor bereits erwähnten oder einer separaten Steuer- und/oder Regelungseinrichtung geregelt bzw. gesteuert werden. Außerdem sind bevorzugt steuer- bzw. regelbare Drosselvorrichtungen 20, 22 und 23 vorgesehen, um in den unterschiedlichen Gasleitungen den Strömungsdurchsatz zu steuern bzw. regeln. Dadurch wird es möglich, die einzelnen Komponenten des Gesamtsystems aus Abgasrückführung, Entschwefelung und SCR- Katalysator unabhängig voneinander zu betreiben bzw. zu regeln oder zu steuern. Grundsätzlich gilt dabei folgendes:

Die der Abgasrückführung bzw. der Frischluftseite zugeführte NH₃-Mengeund/oder die der Abgasrückführung bzw. der Frischluftseite zugeführte Teilstrommenge ist bzw. sind von folgenden Faktoren abhängig und wird bzw. werden mit den entsprechenden Steuerorganen variiert:
- Schwefelgehalt des Kraftstoffs
- Luft-/Kraftstoffverhältnis
- Ladedruck
- Luftfeuchte
- zurückgeführten Abgasmenge (AGR-Rate),
während die Abgasrückführung abhängig ist von
- einem Soll-NOx-Rohwert
- einem Ruß-Sollwert
- dem Luft-/Kraftstoffverhältnis
und die SCR- Reaktion von folgenden Größen beeinflusst wird:
- NOx-Rohemission
- NOx- Sollkonzentration
- SCR- Katalysatortemperatur

Dies hat beispielsweise zur Folge, dass die über die Injektorleitung 12 zugeführte Reaktantmenge sich aus der Summe der für die Entschwefelung der Abgasrückführung und der für die SCR-Reaktion benötigten NH₃- Menge ergibt. Die zugeführte NH₃- Menge ergibt sich dabei überlicherweise aus wenigstens vier der oben genannten Größen.

Die Aufteilung dieser Menge in die für die Teilsysteme SCR- und Entschwefelung notwendigen Teilmengen erfolgt im Anschluss über die in den Teilströmen angeordneten Drosselvorrichtungen, d.h. in den dargestellten Ausführungsbeispielen über die Drosselvorrichtungen 13, 14, 15, 20, 22, 23 und 24.

## Patentansprüche

1. Verfahren zum Entschwefeln eines Abgasrückstroms einer mit einem Abgasturbolader (4) aufgeladenen Brennkraftmaschine, der der Brennkraftmaschine (1) auf deren Frischluftseite (8) zugeführt wird, wobei zur Entschwefelung im Abgasrückstrom (7") Ammoniak eingesetzt wird, und wobei aus dem Abgasstrom (2) der Brennkraftmaschine (1) wenigstens ein Abgasteilstrom (7, 17) abgezweigt wird, **dadurch gekennzeichnet, dass** von einem von der Brennkraftmaschine (2) über eine Turbine (3) des Abgasturboladers (4) zu einem SCR-Katalysator (10) geführten Abgashauptstrom stromauf der Turbine (3) ein erster Abgasteilstrom (7) abgezweigt wird, wobei dem abgezweigten ersten Abgasteilstrom (7) vor dessen teilweiser Zurückführung in den Abgashauptstrom wenigstens ein ammoniakabspaltender Reaktant (12) zugeführt wird und der so beladene Abgasteilstrom (7') teilweise als Abgasrückstrom (7") direkt der Frischluftseite (8) zugeführt und teilweise als Nachbehandlungsteilstrom (9) stromauf des SCR-Katalysators (10) in den zum SCR-Katalysator (10) geführten Abgashauptstrom zurückgeführt wird, wobei die der Frischluftseite (8) zugeführte Abgasrückstrommenge und die dem SCR-Katalysator (10) zugeführte Menge des Nachbehandlungsteilstroms (9) in Abhängigkeit von wenigstens einem, die jeweilige Betriebssituation der Brennkraftmaschine (1) definierenden Betriebsparameter vorgegeben und/oder variiert werden.

2. Verfahren nach einem der vorhergehenden Ansprüche, **dadurch gekennzeichnet, dass** auf der Frischluftseite (8) ein stromab des SCR-Katalysators (10) abgezweigter weiterer Abgasteilstrom (16) eingespeist wird, wobei die Menge dieses der Frischluftseite (8) zugeführten Abgasteilstroms (16) in Abhängigkeit von der der Frischluftseite (8) zugeführten Abgasrückstrommenge und/oder der dem SCR-Katalysator (10) zugeführten Menge des Nachbehandlungsteilstroms (9) gesteuert und/oder geregelt wird und/oder in Abhängigkeit von wenigstens einem, die jeweilige Betriebssituation der Brennkraftmaschine (1) definierenden Betriebsparameter vorgegeben und/oder variiert wird.

3. Verfahren nach Anspruch 1 oder 2, **dadurch gekennzeichnet, dass** auf der Frischluftseite (8) ein stromauf der Turbine (3) des Abgasturboladers (4) abgezweigter, vorzugsweise gekühlter, weiterer Abgasteilstrom (17) eingespeist wird, wobei die Menge dieses der Frischluftseite (8) zugeführten weiteren Abgasteilstroms (17) in Abhängigkeit von der der Frischluftseite (8) zugeführten Abgasrückstrommenge und/oder der dem SCR-Katalysator (10) zugeführten Menge des Nachbehandlungsteilstroms (9) gesteuert und/oder geregelt wird und/oder in Abhängigkeit von wenigstens einem, die jeweilige Betriebssituation der Brennkraftmaschine (1) definierenden Betriebsparameter vorgegeben und/oder variiert wird.

4. Verfahren nach einem der vorhergehenden Ansprüche, **dadurch gekennzeichnet, dass** stromab der Zuführung für den wenigstens einen ammoniakabspaltenden Reaktanten wenigstens ein Katalysator (19) zur Zersetzung des Reaktanten im vom Abgasstrom abgezweigten ammoniakbeladenen Abgasteilstrom (7') angeordnet ist, wobei vorzugsweise der Katalysator (19) zur Zersetzung des ammoniakabspaltenden Reaktanten als Aktivkomponenten wenigstens eine der folgenden Verbindungen oder Elemente, gegebenenfalls in ihrer Oxidform, enthält:
• Titan,
• Silizium,
• Vanadium,
• Wolfram,
• Eisen,
• Aluminium,
• Gold,
• Zeolithe.

5. Verfahren nach einem der vorhergehenden Ansprüche, **dadurch gekennzeichnet, dass** die der Frischluftseite (8) und die dem SCR-Katalysator (10) zugeführten Mengenströme durch Drosselung mittels wenigstens einer Drosseleinrichtung (13, 14, 15, 20, 22, 23, 24) gesteuert und/oder geregelt werden.

6. Verfahren nach einem der vorhergehenden Ansprüche, **dadurch gekennzeichnet, dass** die Zuführung des ammoniakbeladenen Abgasrückstroms (7") auf der Frischluftseite (8) stromauf und/oder stromab eines Verdichters (5) eines Abgasturboladers (4) erfolgt und/oder dass die Zuführung des ammoniakbeladenen Abgasrückstroms (7") auf der Frischluftseite (8) stromab von frischluftseitig verbauten Kühlern (21) erfolgt.

7. Verfahren nach einem der vorhergehenden Ansprüche, **dadurch gekennzeichnet, dass** die zugeführte NH₃-Menge in Abhängigkeit von definierten Betriebsparametern gesteuert und/oder geregelt wird, insbesondere in Abhängigkeit von wenigstens vier der nachfolgend genannten Betriebsparameter abhängig ist:
• Schwefelgehalt des Kraftstoffs
• Luft-/Kraftstoffverhältnis
• Ladedruck
• Luftfeuchte
• zurückgeführte Abgasmenge (AGR-Rate)
• NOx-Rohemission
• NOx- Sollkonzentration
• Temperatur des SCR- Katalysators

8. Vorrichtung zum Entschwefeln eines Abgasrückstroms, der der mit einem Abgasturbolader (4) ausgerüsteten Brennkraftmaschine (1) auf deren Frischluftseite zugeführt wird, **dadurch gekennzeichnet, dass** von einer von der Brennkraftmaschine (1) zu einer Turbine (3) des Abgasturboladers (4) und weiter zu einem SCR-Katalysator (10) führenden Abgasleitung (2, 11) eine erste Abzweigleitung (7a) stromauf einer Turbine (3) des Abgasturboladers (4) abzweigt, wobei die erste Abzweigleitung (7) mit einer Zuführeinrichtung zur Zuführung wenigstens eines ammoniakabspaltenden Reaktanten gekoppelt ist und einen ersten Abgasteilstrom als ammoniakbeladenen Abgasrückstrom (7") direkt zur Frischluftseite (8) der Brennkraftmaschine (1) zurückführt, und wobei eine von der ersten Abzweigleitung (7a) abzweigende zweite Abzweigleitung (9a) vorgesehen ist, die stromauf des SCR-Katalysators(10) in die zum SCR-Katalysator (10) führende Abgasleitung (2, 11) mündet und einen Teil des ersten Abgasteilstroms als Nachbehandlungsteilstrom (9) zur Abgasnachbehandlung in den SCR-Katalysator (10) zurückführt, wobei eine Steuer- und/oder Regelungseinrichtung vorgesehen ist, die die der Frischluftseite (8) zugeführte Abgasrückstrommenge und die dem SCR-Katalysator (10) zugeführte Menge des Nachbehandlungsteilstroms (9) in Abhängigkeit von wenigstens einem, die jeweilige Betriebssituation der Brennkraftmaschine (1) definierenden Betriebsparameter vorgibt und/oder variiert.

9. Vorrichtung nach Anspruch 8, **dadurch gekennzeichnet, dass** von der zur Turbine (3) führenden Abgasleitung (2) eine dritte Abzweigleitung (17a) abzweigt, die über einen Wärmetauscher (18) an eine Frischluftleitung (6) der Brennkraftmaschine (1) angeschlossen ist, wobei vorzugsweise an die Frischluftleitung (6) die Hochdruckseite eines Verdichters (5) des Turboladers (4) und die erste Abzweigleitung (7a) angeschlossen sind.

10. Vorrichtung nach Anspruch 8 oder 9, **dadurch gekennzeichnet, dass** stromab des SCR-Katalysators eine weitere Abzweigleitung (16a) von einer Abgasleitung (11) abzweigt und der Frischluftseite (8) zugeführt wird, insbesondere in die der Frischluftseite (8) zugeführte erste Abzweigleitung (7a) einmündet.

11. Vorrichtung nach einem der Ansprüche 8 bis 10, **dadurch gekennzeichnet, dass** die erste Abgaszweigleitung (7a) auf der Frischluftseite (8) stromauf und/oder stromab eines Verdichters (5) eines Abgasturboladers (4) in die Frischluftleitung (6) mündet und/oder dass die erste Abgaszweigleitung (7a) auf der Frischluftseite (8) stromab von frischluftseitig verbauten Kühlern (21) in die Frischluftleitung (6) mündet.

12. Vorrichtung nach einem der Ansprüche 8 bis 11, **dadurch gekennzeichnet, dass** mittels der Steuer- und/oder Regeleinrichtung die der Frischluftseite (8) und die dem Abgasnachbehandlungssystem zugeführten Mengenströme durch Ansteuerung wenigstens einer leitungsseitig angeordneten Drosseleinrichtung (13, 14, 15, 20, 22, 23, 24) gesteuert und/oder geregelt sind.

## Claims

1. Method for desulphurizing an exhaust-gas recirculation flow of an internal combustion engine that is supercharged by means of an exhaust-gas turbocharger (4), said exhaust-gas recirculation flow being supplied to the internal combustion engine (1) on the fresh-air side (8) thereof, wherein ammonia is used for the desulphurization in the exhaust-gas recirculation flow (7"), and wherein at least one partial exhaust-gas flow (7, 17) is branched off from the exhaust-gas flow (2) of the internal combustion engine (1), **characterized in that**, from an exhaust-gas main flow conducted from the internal combustion engine (2) via a turbine (3) of the exhaust-gas turbocharger (4) to an SCR catalytic converter (10), a first partial exhaust-gas flow (7) is branched off upstream of the turbine (3), wherein a reactant (12) that splits to form ammonia is supplied to the branched-off first partial exhaust-gas flow (7) before the latter is partially recirculated into the exhaust-gas main flow, and the thus laden partial exhaust-gas flow (7') is supplied partially, as an exhaust-gas recirculation flow (7"), directly to the fresh-air side (8) and is partially, as an aftertreatment partial flow (9), recirculated upstream of the SCR catalytic converter (10) into the main exhaust-gas flow conducted to the SCR catalytic converter (10), wherein the flow rate of the exhaust-gas recirculation flow supplied to the fresh-air side (8) and the flow rate of the aftertreatment partial flow (9) supplied to the SCR catalytic converter (10) are predefined and/or varied as a function of at least one operating parameter that defines the respective operating situation of the internal combustion engine (1).

2. Method according to one of the preceding claims, **characterized in that** a further exhaust-gas partial flow (16) that is branched off downstream of the SCR catalytic converter (10) is fed in on the fresh-air side (8), wherein the flow rate of said exhaust-gas partial flow (16) that is supplied to the fresh-air side (8) is controlled and/or regulated as a function of the flow rate of the exhaust-gas recirculation flow supplied to the fresh-air side (8) and/or as a function of the flow rate of the aftertreatment partial flow (9) supplied to the SCR catalytic converter (10), and/or is predefined and/or varied as a function of at least one operating parameter that defines the respective operating situation of the internal combustion engine (1).

3. Method according to Claim 1 or 2, **characterized in that** a further exhaust-gas partial flow (17) that is branched off upstream of the turbine (3) of the exhaust-gas turbocharger (4) and which is preferably cooled is fed in on the fresh-air side (8), wherein the flow rate of said exhaust-gas partial flow (17) that is supplied to the fresh-air side (8) is controlled and/or regulated as a function of the flow rate of the exhaust-gas recirculation flow supplied to the fresh-air side (8) and/or as a function of the flow rate of the aftertreatment partial flow (9) supplied to the SCR catalytic converter (10), and/or is predefined and/or varied as a function of at least one operating parameter that defines the respective operating situation of the internal combustion engine (1).

4. Method according to one of the preceding claims, **characterized in that**, downstream of the supply for the at least one reactant that splits to form ammonia, there is arranged at least one catalytic converter (19) for breaking down the reactant in the ammonia-laden exhaust-gas partial flow (7') that is branched off from the exhaust-gas flow, wherein preferably, the catalytic converter (19) for breaking down the reactant that splits to form ammonia comprises, as active components, at least one of the following compounds or elements, if appropriate in the oxide form thereof:
• titanium,
• silicon,
• vanadium,
• tungsten,
• iron,
• aluminium,
• gold,
• zeolites.

5. Method according to one of the preceding claims, **characterized in that** the flow rates supplied to the fresh-air side (8) and the flow rates supplied to the SCR catalytic converter (10) are controlled and/or regulated by throttling by means of at least one throttle device (13, 14, 15, 20, 22, 23, 24).

6. Method according to one of the preceding claims, **characterized in that** the ammonia-laden exhaust-gas recirculation flow (7") is supplied to the fresh-air side (8) upstream and/or downstream of a compressor (5) of an exhaust-gas turbocharger (4), and/or **in that** the ammonia-laden exhaust-gas recirculation flow (7") is supplied to the fresh-air side (8) downstream of coolers (21) installed on the fresh-air side.

7. Method according to one of the preceding claims, **characterized in that** the supplied NH₃ flow rate is controlled and/or regulated as a function of defined operating parameters, in particular as a function of at least four of the operating parameters listed below:
• sulphur content of the fuel,
• air/fuel ratio,
• charge pressure,
• air humidity,
• recirculated exhaust-gas flow rate (EGR rate),
• untreated NOx emissions,
• setpoint NOx concentration,
• temperature of the SCR catalytic converter.

8. Device for desulphurizing an exhaust-gas recirculation flow which is supplied to the internal combustion engine (1), which is equipped with an exhaust-gas turbocharger (4), on the fresh-air side of said internal combustion engine, **characterized in that**, from an exhaust line (2, 11) which leads from the internal combustion engine (1) to a turbine (3) of the exhaust-gas turbocharger (4) and onward to an SCR catalytic converter (10), a first branch line (7a) branches off upstream of a turbine (3) of the exhaust-gas turbocharger (4), wherein the first branch line (7) is coupled to a supply device for the supply of at least one reactant that splits to form ammonia and recirculates a first partial exhaust-gas flow as an ammonia-laden exhaust-gas recirculation flow (7") directly to the fresh-air side (8) of the internal combustion engine (1), and wherein a second branch line (9a) is provided which branches off from the first branch line (7a) and which opens, upstream of the SCR catalytic converter (10), into the exhaust line (2, 11) leading to the SCR catalytic converter (10) and recirculates a part of the first partial exhaust-gas flow as an aftertreatment partial flow (9) for the exhaust-gas aftertreatment in the SCR catalytic converter (10), wherein a control and/or regulating device is provided which predefines and/or varies the flow rate of the exhaust-gas recirculation flow supplied to the fresh-air side (8), and the flow rate of the aftertreatment partial flow (9) supplied to the SCR catalytic converter (10), as a function of at least one operating parameter that defines the respective operating situation of the internal combustion engine (1).

9. Device according to Claim 8, **characterized in that** a third branch line (17a) branches off from the exhaust line (2) that leads to the turbine (3), which third branch line is connected to a fresh-air line (6) of the internal combustion engine (1) via a heat exchanger (18), wherein the highpressure side of a compressor (5) of the turbocharger (4) and the first branch line (7a) are preferably connected to the fresh-air line (6).

10. Device according to Claim 8 or 9, **characterized in that**, downstream of the SCR catalytic converter, a further branch line (16a) branches off from an exhaust line (11) and is supplied to the fresh-air side (8), in particular issues into the first branch line (7a) that is supplied to the fresh-air side (8).

11. Device according to one of Claims 8 to 10, **characterized in that** the first exhaust-gas branch line (7a), on the fresh-air side (8), issues into the fresh-air line (6) upstream and/or downstream of a compressor (5) of an exhaust-gas turbocharger (4), and/or **in that** the first exhaust-gas branch line (7a), on the fresh-air side (8), issues into the fresh-air line (6) downstream of coolers (21) installed on the fresh-air side.

12. Device according to one of Claims 8 to 11, **characterized in that** the flow rates supplied to the fresh-air side (8) and the flow rates supplied to the exhaust-gas aftertreatment system are controlled and/or regulated by means of the control and/or regulating device through actuation of at least one line-mounted throttle device (13, 14, 15, 20, 22, 23, 24).

## Revendications

1. Procédé de désulfuration d'un reflux de gaz d'échappement d'un moteur à combustion interne chargé avec un turbocompresseur (4), qui alimente le moteur à combustion interne (1) du côté de l'air propre (8), dans lequel de l'ammoniac est utilisé pour la désulfuration du reflux de gaz d'échappement (7"), et dans lequel au moins une fraction du gaz d'échappement (7, 17) est dérivée du flux de gaz d'échappement (2) du moteur à combustion interne (1), **caractérisé en ce qu'**une première fraction de gaz d'échappement (7) est déviée d'un flux principal de gaz d'échappement (mené depuis le moteur à combustion interne (2) à un catalyseur SCR (10) par une turbine (3) du turbocompresseur (4)) en amont de la turbine (3), dans lequel au moins un réactif de séparation de l'ammoniac (12) est ajouté à la première fraction déviée de gaz d'échappement (7) avant son retour partiel dans le flux principal de gaz d'échappement et la fraction de gaz d'échappement (7') ainsi chargée est conduite en partie directement côté air frais (8) en tant que reflux de gaz d'échappement (7") et conduite en partie en amont du catalyseur SCR (10) dans le flux principal de gaz d'échappement dirigé vers le catalyseur SCR (10) en tant que flux partiel pour traitement ultérieur (9), dans lequel la quantité de reflux de gaz d'échappement conduite côté air frais (8) et la quantité de flux partiel pour traitement ultérieur (9) conduite au catalyseur SCR (10) sont définies et/ou variées en fonction d'au moins un paramètre opérationnel défini par la situation opérationnelle respective du moteur à combustion interne (1).

2. Procédé selon l'une des revendications ci-dessus, **caractérisé en ce qu'**une fraction du gaz d'échappement supplémentaire (16) dérivée en aval du catalyseur SCR (10) est injectée côté air frais (8), dans lequel la quantité de cette fraction du gaz d'échappement supplémentaire (16) conduite côté air frais (8) est contrôlée et/ou réglée en fonction de la quantité de reflux de gaz d'échappement conduite côté air frais (8) et/ou de la quantité de flux partiel pour traitement ultérieur (9) conduite au catalyseur SCR (10) et/ou définie et/ou variée en fonction d'au moins un paramètre opérationnel défini par la situation opérationnelle respective du moteur à combustion interne (1).

3. Procédé selon la revendication 1 ou 2, **caractérisé en ce qu'**une fraction du gaz d'échappement supplémentaire (17), de préférence refroidie, dérivée en amont de la turbine (3) du turbocompresseur (4) est injectée côté air frais (8), dans lequel la quantité de cette fraction du gaz d'échappement supplémentaire (17) conduite côté air frais (8) est contrôlée et/ou réglée en fonction de la quantité de reflux de gaz d'échappement conduite côté air frais (8) et/ou de la quantité de flux partiel pour traitement ultérieur (9) conduite vers le catalyseur SCR (10) et/ou définie et/ou variée en fonction d'au moins un paramètre opérationnel défini par la situation opérationnelle respective du moteur à combustion interne (1).

4. Procédé selon l'une des revendications ci-dessus, **caractérisé en ce qu'**au moins un catalyseur (19) pour la décomposition du réactif dans la fraction de gaz d'échappement (7') chargée en ammoniac dérivée du flux de gaz d'échappement est affecté pour au moins un réactif de séparation de l'ammoniac en aval de l'alimentation, dans lequel le catalyseur (19) pour la décomposition du réactif de séparation de l'ammoniac contient de préférence comme composant actif au moins un des composés ou éléments suivants, le cas échéant sous forme d'oxyde :
• titane
• silicium
• vanadium
• tungstène
• fer
• aluminium
• or
• zéolithe.

5. Procédé selon l'une des revendications ci-dessus, **caractérisé en ce que** les quantités de flux conduites vers le côte air frais (8) et le catalyseur SCR (10) sont contrôlées et/ou réglées par réduction au moins d'au moins un dispositif d'étranglement (13, 14, 15, 20, 22, 23, 24).

6. Procédé selon l'une des revendications ci-dessus, **caractérisé en ce que** l'apport du reflux de gaz d'échappement chargé en ammoniac (7") côté air frais (8) se fait en amont et/ou en aval d'un compresseur (5) d'un turbocompresseur (4) et/ou que l'apport du reflux de gaz d'échappement chargé en ammoniac (7") côté air frais (8) se fait en aval d'un radiateur de refroidissement (21) du côté air frais.

7. Procédé selon l'une des revendications ci-dessus, **caractérisé en ce que** la quantité de NH₃ apportée est contrôlée et/ou réglée en fonction des paramètres opérationnels définis, en particulier en fonction d'au moins quatre des paramètres opérationnels nommés ci-après :
• teneur en soufre du carburant
• rapport air/carburant
• pression turbo
• humidité de l'air
• fraction de gaz d'échappement recyclée (débit AGR)
• émission brute de NOₓ
• concentration prévue de NOₓ
• température du catalyseur SCR.

8. Dispositif de désulfuration d'un reflux de gaz d'échappement d'un moteur à combustion interne chargé avec un turbocompresseur (4), qui alimente le moteur à combustion interne (1) du côté de l'air frais, **caractérisé en ce qu'**un premier conduit de dérivation (7a) dérive du tuyau d'échappement (2, 11) courant du moteur à combustion interne (1) vers une turbine (3) du turbocompresseur (4) et ensuite à un catalyseur (10) en amont d'une turbine (3) du turbocompresseur (4), dans lequel le premier conduit de dérivation (7) est raccordé à un dispositif d'alimentation en au moins un réactif de séparation d'ammoniac et reconduit une première fraction déviée de gaz d'échappement directement au côté air frais (8) du moteur à combustion interne (1) en tant que reflux de gaz d'échappement chargé en ammoniac (7"), et dans lequel un second conduit de dérivation (9a) dérivant du premier conduit de dérivation (7a) est prévu, aboutissant en amont du catalyseur SCR (10) au tuyau d'échappement (2, 11) menant au catalyseur SCR (10) et reconduisant une partie de la première fraction du gaz d'échappement pour traitement subséquent dans le catalyseur SCR (10) en tant que flux partiel pour traitement ultérieur (9), dans lequel un dispositif de contrôle et/ou régulation est prévu, qui définit et/ou varie la quantité de reflux de gaz d'échappement conduite côté air frais (8) et la quantité de flux partiel pour traitement ultérieur (9) conduite au catalyseur SCR (10) en fonction d'au moins un paramètre opérationnel défini par la situation opérationnelle respective du moteur à combustion interne (1).

9. Dispositif selon la revendication 8, **caractérisé en ce qu'**un troisième conduit de dérivation (17a) dérive depuis le tuyau d'échappement (2) menant à la turbine (3), raccordé à une arrivée d'air frais (6) du moteur à combustion interne (1) sur un échangeur de chaleur (18), dans lequel la première dérivation (7a) et la partie haute pression d'un compresseur (5) du turbocompresseur (4) sont raccordées de préférence à l'arrivée d'air frais (6).

10. Dispositif selon la revendication 8 ou 9, **caractérisé en ce qu'**une dérivation supplémentaire (16a) dérive d'un tuyau d'échappement (11) en aval du catalyseur SCR et est alimenté par le côté air frais (8), et débouche en particulier sur la première dérivation (7a) alimentée par le côté air frais (8).

11. Dispositif selon une des revendications 8 à 10, **caractérisé en ce que** la première dérivation (7a) du côté arrivée d'air frais (8) mène à l'arrivée d'air frais (6) en amont et/ou en aval d'un compresseur (5) d'un turbocompresseur (4) et/ou **en ce que** la première dérivation (7a) du côté arrivée d'air frais (8) mène à l'arrivée d'air frais (6) en aval d'un radiateur de refroidissement (21) du côté air frais.

12. Dispositif selon une des revendications 8 à 11, **caractérisé en ce que**, par le biais du dispositif de contrôle et/ou de régulation, la quantité de flux alimentée par le côté air frais (8) et celle alimentée par le système de traitement ultérieur des gaz d'échappement sont contrôlées e/ou régulées par la commande d'au moins un dispositif d'étranglement (13, 14, 15, 20, 22, 23, 24) disposé du côté du conduit.
